# EUROPEAN PATENT APPLICATION

(11) **EP 4 116 696 A1**
(43) Date of publication of application: **11.01.2023**
(21) Application number: 21183967.5
(22) Date of filing: 06.07.2021
(51) Int. Cl.: G01N 1/36, G01N 1/06

(54) **METHOD FOR PREPARING A MICROSCOPIC SAMPLE FOR EXAMINATION IN AN ELECTRON MICROSCOPE AND EMBEDDING MOULD FOR USE THEREIN**

(71) Applicant: Leica Mikrosysteme GmbH, 1170 Wien (AT)
(72) Inventor: RANNER, Robert, 1110 Wien (AT); ZIMMERMANN, Michael, 2333 Leopoldsdorf (AT); KELLERMANN, Peer Oliver, 1180 Wien (AT)
(74) Representative: DehnsGermany Partnerschaft von Patentanwälten

(57) **Abstract**

The present invention relates to a method (900) for preparing a microscopic sample (600) for examination in an electron microscope, said method (900) comprising embedding (902) said sample (600) in an embedding medium (512) producing a sample block (700) and serially sectioning (906) said sample block (700) using a microtome (100) producing a section ribbon (800), wherein said section ribbon (800) is produced to comprise one or more first sections (802) of the sample block (700) including a part (602) of the sample (600) and one or more second sections (804) of the sample block (700) not including a part (602) of the sample (600), wherein said embedding (902) is performed using an embedding mould (500) comprising an undivided inner space (506), a first compartment (508) and a second compartment (510), said first compartment (508) and said second compartment (510) extending from and being contiguous with said undivided inner space (506), wherein said embedding (902) comprises placing said sample (600) into said first compartment (508) but not in said second compartment (510), filling said first compartment (508), said second compartment (510) and said undivided inner space (506) at least partially with said embedding medium (512) and curing said embedding medium (512), and wherein said serial sectioning (906) includes forming said one or more first sections (802) from a part (702) of the sample block (700) cured in said first compartment (508) and forming said one or more second sections (804) from a part (704) of the sample block (700) cured in said second compartment (510). An embedding mould (500) adapted to be used in the method (900) is also part of the present invention.

## Description

### Description

The present invention relates to a method for preparing a microscopic sample for examination in an electron microscope and to an embedding mould for use in such a method.

### Prior art

Particularly in the field of neurosciences, but also in other fields of biology and medicine, the examination of serial sections of tissues, in particular by means of electron microscopy, and the reconstruction of three-dimensional sample information from such serial sections of tissue is of great importance.

Corresponding methods include, but are not limited to, so-called "Serial Section Scanning Electron Microscopy" (ssSEM, S3EM) as well as so-called "Serial Section Transmission Electron Microscopy" (ssTEM), wherein the present invention can be used in particular in connection with ssSEM. However, it is understood that the principles explained below may also apply in particular to other methods of a comparable nature. In particular, the present invention can be used in principle in connection with light microscopy instead of electron microscopy, although the following explanations focus on the latter.

Using ssSEM, as described for example in Horstmann, H. et al, Serial Section Scanning Electron Microscopy (S3EM) on Silicon Wafers for Ultra-Structural Volume Imaging of Cells and Tissues. PLoS ONE 7(4), 2012, e35172, a high-resolution, three-dimensional (3D) imaging of cellular ultrastructure can be performed. In contrast to ssTEM, see below, which allows examination of limited subcellular volumes but rarely a complete ultrastructural reconstruction of large volumes, whole cells, or whole tissues, this is possible using ssSEM.

In ssSEM, as the name says, serial sectioning of tissues is combined with scanning electron microscopy (SEM), especially using a conductive wafer as a support. In ssSEM, section ribbons with up to hundreds of sections with a thickness of, for example, 35 nm can be generated and imaged on the wafer with a lateral pixel resolution of, for example, 3.7 nm. In ssSEM, electrons backscattered from the sections are typically recorded with a detector in the objective of the SEM ("in-lens detector"). The images resulting from such a method are qualitatively comparable to those of a conventional TEM. The main advantage of ssSEM is, as mentioned, that it can be used to reconstruct comparatively large structures, for example in the two- to three-digit cubic micrometer range.

The method of ssTEM is described, for example, in Harris, K.M. et al, Uniform Serial Sectioning for Transmission Electron Microscopy, J. Neurosci. 26(47), 2006, 12101-12103. Despite representing a more conventional method, ssTEM may be superior to other methods for reconstructing three-dimensional sample information such as confocal microscopy, especially because of its high resolution.

A sample is prepared for ssSEM and ssTEM in a known manner for processing and is embedded, for example, in agarose or suitable plastics. From the embedded sample, section ribbons are created using an ultramicrotome by adjusting a suitable feed rate, with individual sections adhering to each other in such ribbons, "adhering" referring to a relatively weak connection at the edges. The section ribbons generated in this way are allowed to float, while initially still being attached to the blade, in a liquid bath and are removed ("fished") therefrom by means of suitable transfer devices (so-called slot grids or, in the case of ssSEM, wafers) for further examination. It is also possible not to let the generated section ribbons float on a liquid bath, but to transfer them directly to a suitable carrier, for example a wafer.

The position of a single section in the examined object corresponds to its position in a generated section ribbon and vice versa. Therefore, in corresponding procedures it is of great importance to generate section ribbons that are uninterrupted and as long as possible, in order to be able to indicate the position of the individual sections in the overall sample in this way, or in which preferably all sections can be imaged without some being lost for whatsoever reasons. However, as indicated in the cited technical literature, this cannot always be ensured, for example with certain embedding materials. For long section ribbons, correspondingly long liquid baths or transfer devices are required and the handling of the cuts becomes more difficult. In addition, the targeted generation of section ribbons typically proves to be not unproblematic in practice and requires skill and prolonged training.

One way to create multiple section ribbons, when using a liquid bath, is to use a manipulation tool (classically an eyelash) to separate the currently adhering section ribbon from the microtome blade after each desired number of sections and direct it to an area of the liquid bath where it will not interfere with the cutting of a subsequent ribbon. When a sufficient number of section ribbons have been produced in this manner, the transfer device is slowly lifted upwards and out of the liquid. The liquid is allowed to run off, resulting in the section ribbons adhering to the transfer device. Typically, up to approximately 200 sections can be produced in this manner. If no liquid bath is used, the explanations apply accordingly.

A disadvantage in a corresponding process is that the sections of a section ribbon often do not adhere reliably to each other, particularly when manipulated by an operator. Therefore, for example, ribbon parts can drift apart on the liquid surface so that they can subsequently no longer be assigned to the cutting sequence. In addition, a bending of corresponding section ribbons can often be observed, due to which they abut on edge structures or other ribbons. As a result, the resulting fragments may tear and drift apart. If section ribbons or their fragments abut the liquid boundary, when a liquid bath is used, they cannot be deposited reliably on the transfer device, or at all, but continue to adhere preferentially to the liquid boundary. Thus, sections may be lost. A further disadvantage is that only a low degree of filling of the transfer device can be achieved in the manner explained. This is typically at most 10%, so that frequent transfers are required in corresponding processes. In addition, manipulations with a manipulation tool are risky, since the ribbons can be damaged. In particular, ruptures and/or holes or wrinkles may occur.

An alternative method described in US 2015/0135917 A1 is to form one or a plurality of section ribbons of which the last section produced still adheres to the blade of the microtome while sections previously produced float, as a part of the section ribbon, on the liquid surface and are gradually pushed forward and away from the blade as new sections are added to the ribbon.

In this way, when several parallel section ribbons are formed, up to 300 sections can be produced. In this context, the section ribbons are lifted out of the liquid using a suitable transfer device as also described in in US 2015/0135917 A1. As, however, such transfer devices comprise a peripheral area which cannot be used for later observation, sections placed on the peripheral area are lost to further examination and only section positioned closer to the centre are usable. In other words, it is necessary to position the sections of interest at a certain distance from the blade, in order to be able to analyse them in a later step. This is typically realized by the use of so-called "pusher", "release", "dummy" or "blank" sections (these terms being used synonymously herein), which only have the purpose of extending the section ribbons and thus pushing the sections of interest into the central area of the transfer device.

As such release sections would otherwise consume valuable sample material they are formed from a part of a sample block not comprising a sample or a valuable part thereof. As disclosed in US 20150135917 A1, a separate sample block comprising only embedding material and being completely void of the sample, or a region of the sample block void of the sample may be used in this connection. The blank sections used accordingly are lost to the actual examination as they lie outside a transfer device or a wafer, or an observable region thereof. If release sections were taken from regions including the sample, the generation of release sections would not allow a continuous section generation over larger sample areas, since the series of sections of interest would be repeatedly interrupted by the release sections required for positioning which would be missing in the subsequent examination.

It is an object of the present invention to simplify a process of preparing sample ribbons comprising sections with and without sample material, the latter particularly being formed for the sole purpose of positioning the former, particularly on a liquid surface, in a more reliable and user-friendly manner.

### Disclosure of the invention

Against this background, the present invention proposes a method for preparing a microscopic sample for examination in an electron microscope and an embedding mould for use in such a method with the features of the independent patent claims. Embodiments are the subject of the subclaims as well as the following description.

### Advantages of the invention

There are a large number of commercially available embedding moulds, which generally can be used in the methods as described hereinbefore. Embedding moulds generally are of a cylindrical shape and sometimes comprise a tapered tip, in order to reduce further preparation work, as explained below. Embedding of a microscopic sample in an embedding mould of this kind comprises placing the sample into the inner space of the embedding mould, filling said inner space with an embedding medium of a suitable type, which is in the field with which the present invention is concerned a so-called "ribboning" embedding medium like a polyester wax or an epoxy material, and curing (hardening) said embedding medium in the mould, thereby forming a "sample block". After removing the sample block from the mould, for which process step the mould may comprise defined breaking points or tearing strips, the sample block formed may be subjected to "trimming" step in which superfluous embedding medium may be removed in order to adapt the cutting area to the size of an ultramicrotome blade. Trimming work may be reduced by using tapered embedding moulds, i.e. embedding moulds comprising "tips" in which the sample may be placed, which may then be surrounded by a smaller amount of embedding medium to be cut away. Multi-well embedding moulds, partially resembling multi-well sample plates, are also known. They comprise a plurality of individual embedding moulds as described hereinbefore in a common carrier with which they may be integrally formed or into which they may be inserted.

None of the embedding moulds presently available allow for a clear local separation of the specimen from regions from which blank sections for positioning may be produced. Essentially, the currently available moulds are designed in such a way that the sample material is positioned at a largely undefined position, which may be in the centre or in the periphery of the inner space of the sample mould. In other words, the sample may not be restricted to certain regions and an operator has no possibility define regions to in advance from which he or she can form sample sections on the one hand and blank sections on the other hand. This may significantly complicate the formation of blank sections for positioning.

As mentioned, US 2015/0135917 A1 discloses the formation of blank sections from embedding material void of a sample. In a first embodiment, different sample blocks are used, one of which containing the sample and the other being completely void of the sample, and in a second embodiment, a region of a single sample block is kept void of the sample such that such a region, when sectioned, produces a blank section. The first embodiment, however, requires the ultramicrotome to be capable to hold several sample blocks and in the second embodiment, positioning of the sample material is often cumbersome as there is no structural separation of different regions and material can still move out of the desired position.

These disadvantages of the prior art are overcome according to the present invention by a method for preparing a microscopic sample for examination in an electron microscope. The method proposed according to the present invention comprises embedding said sample in an embedding medium producing a sample block and serially sectioning said sample block using a microtome producing a section ribbon, as generally known to the skilled person and as described before.

As explained above, said section ribbon is produced to comprise one or more first sections of the sample block including a part of the sample (which may also be referred to as "sample sections") and one or more second sections of the sample block not including a part of the sample ("blank sections").

Said embedding is performed, according to the present invention, using an embedding mould comprising an undivided inner space, a first compartment and a second compartment, said first compartment and said second compartment extending from and being contiguous with said undivided inner space. Said embedding comprises placing said sample into said first compartment but not in said second compartment, filling said first compartment, said second compartment and said undivided inner space at least partially with said embedding medium, and curing said embedding medium. Serial sectioning includes, according to the present invention, forming said one or more first sections from a part of the sample block cured in said first compartment and forming said one or more second sections from a part of the sample block cured in said second compartment. The term "curing" shall refer, in the context used herein, to any type of hardening process including, but not limited, to solidification, cross-linking, polymerisation and (pseudo-)crystallisation.

The invention therefore proposes using an embedding mould in which sample material and blank material (i.e. material of the sample block used for forming the first and second sections, respectively) are kept separate by technical means, i.e. a material barrier between separate compartments or receptacles. Thus, a predefined position of the sample and the blank is present and the basic condition necessary for the automatic section ribbon production, particularly for 3D TEM examinations, i.e. separate sample and blank sections, is fulfilled. With the embedding mould used according to the present invention, the loss of non-usable sample material for the production of automatic serial sections for 3D TEM reconstruction, i.e. for sections which are used for positioning only, is significantly reduced.

The basic idea of using the embedding mould according to the present invention is to position the sample in a separate or defined receptacle, which is locally separated from a receptacle for a second specimen or just empty embedding material. Generally, therefore, if reference is made to "one" first compartment or "one" second compartment, at least one further compartment resembling and having the purpose of the first compartment and at least one further compartment resembling and having the purpose of the second compartment may be present.

A significant advantage of the method of the present invention and the mould used therein, as compared to forming several different sample blocks as in the prior art, e.g. in the corresponding embodiment of US 2015/0135917 A1, is that producing and using only one sample block reduces preparation and mounting time and correspondingly improves user friendliness, reliability and reproducibility. As mentioned, in contrast to the prior art the sample may be more reliably positioned according to the present invention as a mechanical barrier between compartments is present in the mould.

In the method according to the present invention, said section ribbon is made to (at least partly, i.e. particularly with an end not being attached to the ultramicrotome blade) float on a liquid surface while being formed by said serial sectioning, said one or more first sections being pushed forward on the liquid surface to a target position on the liquid surface by a transfer distance. Said pushing forward comprises forming a plurality of said second sections in said section ribbon in a cumulated length corresponding to said transfer distance after forming said one or more first sections. The method may also be performed in part or completely automatically or on the basis of a user setting in an ultramicrotome. In the method, particularly after a plurality of parallel section ribbons have been formed in a comparable manner, said one or more first sections (in each section ribbon, in particular) are fished from the liquid surface using a sample carrier at the target position.

In the method according to the present invention, said forming the one or more first sections is particularly preceded by positioning said part of the sample block formed in said first compartment to be cuttable by a blade of said microtome and said forming the one or more second sections is particularly preceded by positioning said part of the sample block formed in said second compartment to be cuttable by the blade of said microtome. Forming sections, in each case, particularly comprises (i) horizontally advancing the sample block towards a blade of the ultramicrotome, (ii) moving the sample block vertically downwards in a direction orthogonal to a blade edge of said blade, (iii) thereafter retracting the sample block in said horizontal direction, and (iv) moving the sample block upwards to be able to restart the process at step (i), wherein steps (i) to (iv) together form a "rocking" movement.

The advancement and retraction in steps (i) and (iii) is particularly performed in an amount avoiding collisions of parts of the sample carrier or the sample block with the blade and other parts of the microtome and is performed over a (relatively) large distance (such as about 100 to 500 µm, e.g. about 200 µm), wherein the advancement in step (i) additionally comprises an advancement in an amount corresponding to the desired section thickness (such as about 10 to 100 nm, e.g. about 20 to 50 nm or, in a specific example, about 35 nm). The downward movement in step (ii) is preferably performed in different speeds during the course of the movement, such that the sample block, in a first phase of the downward movement, relatively quickly approaches the blade, the block is thereafter, in a second phase, cut in a desired slower cutting speed such as 1 mm/s, and the sample block, after each actual cut, moves away from the blade in a third phase of the movement in a speed again larger than the cutting speed.

Particularly, said sample block may be mounted in said microtome such that said part of the sample block formed in said first compartment is initially arranged vertically below and in a common vertical plane with said part of the sample block formed in said second compartment. Both parts may, in this connection, initially be cut, using the microtome, to a common length. Thereafter, first sections of one or more section ribbons may be formed. That is, at a first lateral position of the blade relatively to the sample block, first sections of a first ribbon band may be formed, and the lateral position of the blade relatively to the sample block may then be changed such that first sections of a second section ribbon may be formed. The first sections of the first and the second section ribbons both adhere to the edge of the blade and parallel extend therefrom. Additional (third, fourth, etc.) section ribbons including first sections may be formed in this manner. Changing the relative positions between the blade and the sample block may include moving the blade or a structure carrying the blade, the sample block, or both, in a direction essentially parallel with, or corresponding to, the edge of the blade.

Absolute and/or relative spatial indications used herein, such as "above", "below" and "besides", in particular refer to the spatial arrangement of the elements correspondingly designated, for example parts of a sample block. By an arrangement of two elements wherein one element is arranged "below the other" is understood in particular that the upper end of the lower of the two elements is at a lower or the same geodetic height as the lower end of the upper of the two elements and that the projections of the two elements on a horizontal plane overlap.

After one or a number of section ribbons, or ribbon parts, each including first sections only, has been formed, the part of the sample block formed in said first compartment and including the sample is shortened by an amount corresponding to a cumulative thickness of the first sections in said horizontal direction, and may optionally be further shortened. Therefore, the part of the sample block formed in said second compartment is accessible to the blade and may be brought into a cutting position. The, or each of the, section ribbons may therefore be elongated by forming second sections or, in other words, attaching second sections to the beginning of the section ribbons previously comprising the first sections only.

In an ultramicrotome, which is used according to the present invention, therefore, the parts of the sample block formed in the first and second compartment may be arranged vertically above each other (i.e. both parts are arranged along a vertical line). In other words, said sample block is mounted in said microtome such that said part of the sample block formed in said first compartment is initially arranged vertically below and in a common vertical plane with said part of the sample block formed in said second compartment.

Be it noted, however, that the method just mentioned, including a specific arrangement of the parts of the sample block above each other, only represents one of several embodiments of the present invention. In a further embodiment, for example, an ultramicrotome blade, which is mounted in a distance to the liquid reservoir or at an angle thereto, may be used, in order to provide a certain distance between the sample block and its parts and the reservoir.

Particularly by providing the first and second compartments in different dimensions, as indicated below in more detail, sections comprising a different, particularly a larger dimension in a cutting direction (and in a longitudinal direction of the section ribbon formed) may be formed by sectioning said part of the sample block formed in said second compartment, as compared to dissecting said part of the sample block formed in said first compartment. If sections comprising a larger dimension in the cutting direction are formed from the part of the sample block corresponding to the second compartment, this allows for a rapid advancement of the first sections by a relatively lower amount of cutting operations.

An embedding mould adapted to be used in a method as discussed in different embodiments above, i.e. a method preparing a microscopic sample for examination in an electron microscope, is also part of the present invention. The embedding mould comprises an undivided inner space, a first compartment and a second compartment, said first compartment and said second compartment extending from and being contiguous with said undivided inner space. As to further advantages and embodiments in connection with such an embedding mould, reference is also made to the explanations above.

According to the present invention, in the embedding mould, at least a part of said undivided inner space may be cylindrical and may have an inner diameter of 2 to 15 mm, e.g. 5 to 10 mm, particularly about 8 mm. At least the cylindrical space, but also all other parts of the mould, may be surrounded by a wall made of a plastic material, the wall having a thickness of 0.1 to 0.5 mm. The embedding mould may comprise a tear tab and a tear track to liberate a sample block formed in the embedding mould after curing the sample block.

The sample mould may particularly comprise a flat bottom, wherein said first compartment and said second compartment are at least in part formed in the form of indentations in said flat bottom. Said indentations may particularly be provided as conical or pyramidal frustra for maximum stability and cutability. In the embedding mould according any embodiment of the present invention, said first compartment and said second compartment may comprise portions divided by dividing structure formed in said embedding mould.

The first and the second compartment may be provided in different sizes or comprising different cross sections in a common plane, the common plane particularly being perpendicular to a longitudinal axis of the undivided inner space. Particularly, a (virtual) line in such a common plane transects the first and the second compartment, wherein a length of said transection between the line and the first compartment is shorter than a length of said transection between the line and the second compartment. Said line particularly corresponds to said vertical direction of cutting in step (ii) mentioned above. In such a configuration, therefore, larger or at least longer second sections may be formed and the same cumulative length in the section ribbon may be reached with less cutting operations.

A further advantage of providing the first and the second compartment in different sizes or comprising different cross sections is that blank sections and sections comprising the sample may be easily identified with the naked eye when handling the sample blocks. If the sample is placed into the smaller compartment (under observation with a binocular microscope, for example), a user may later differentiate between blank compartments and sample compartments without optical assistance.

The invention will further be described with reference to the appended drawings illustrating embodiments of the present invention.

### Short description of the Figures

Figure 1 schematically illustrates a microtome usable according to an embodiment of the present invention.
Figures 2A and 2B schematically illustrate an embedding mould according to an embodiment of the present invention.
Figures 3A to 3C schematically illustrate an embedding mould according to a further embodiment of the present invention.
Figures 4A to 4D schematically illustrate method steps of a method according to an embodiment of the present invention.
Figure 5 schematically illustrates a method according to an embodiment of the present invention in a procedural plan.

In the Figures, elements of identical function or technical realization are indicated with identical reference numerals and a repeated explanation is omitted for reasons of conciseness only. Explanations relating to device elements may apply for corresponding method steps and vice versa.

### Embodiments of the invention

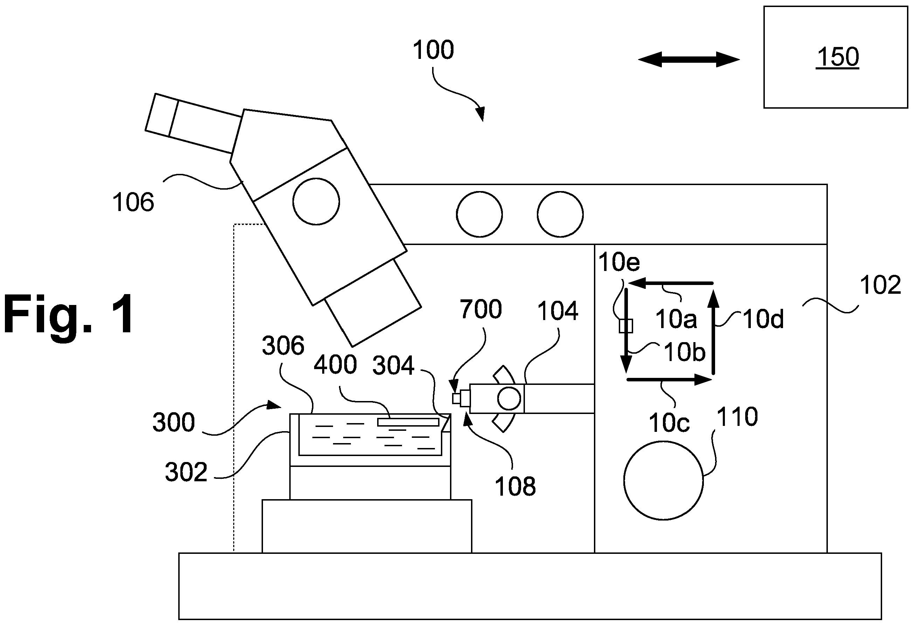

Figure 1 shows a microtome or microtome system 100 according to an embodiment of the present invention in a simplified side view.

The microtome 100 can be designed in particular as an ultramicrotome and an operation of the microtome 100 maybe controlled using a control unit 150 of any type known in the art. Control unit 150 may particularly be provided as a computing and evaluation unit, which is connected to the ultramicrotome 100 via a wired or wireless communication link as indicated by a bidirectional arrow. Other than explicitly shown, the control unit 150 can also be accommodated in the microtome 100 or a housing thereof or in a personal computer system or a workstation.

The ultramicrotome 100 comprises a sample holder 108 attached to a sample arm 104 with which a sample block 700 attached to the sample arm 104 can be moved as illustrated with arrows 10a to 10d to cut a sample in a "cutting window" 10e. As already mentioned before, cutting in the ultramicrotome 100 may particularly comprise (i) advancing (arrow 10a) the sample block 700 towards a blade 304 of the ultramicrotome 100 in the horizontal direction illustrated, (ii) moving the sample block vertically downwards (arrow 10b) in a direction orthogonal to a blade edge of said blade 304, (iii) thereafter retracting the sample block (arrow 10c), and (iv) moving the sample block upwards (arrow 10d) to be able to restart the process at step (i). As mentioned, steps (i) to (iv) together form a "rocking" movement, and the advancement and retraction in steps (i) and (iii) is particularly performed in an amount avoiding collisions wherein advancement in step (i) additionally comprises an advancement in an amount corresponding to the desired section thickness.

The downward movement in step (ii) is, as mentioned before, preferably performed in different speeds, wherein the sample block 700, in a first phase of the downward movement (corresponding to the portion of the arrow 10b above the section window 10e), relatively quickly approaches the blade 104, the block is thereafter, in a second phase (corresponding to the portion of the arrow 10b in the section window 10e), cut in a desired slower cutting speed, and thereafter moves away from the blade in a third phase in a speed again larger than the cutting speed (corresponding to a portion of the arrow 10b below the section window 10e).

The sample arm 104 is connected to a movement unit integrated into a housing 102 which may be known per se and is therefore not discussed in further detail. Manual adjustments or an operation of the ultramicrotome 100 maybe performed using a handle 110 and other handles not individually labelled. An operation of the ultramicrotome 100, i.e. a formation of sections, maybe observed using an observation microscope 106.

A blade unit 300 is shown in a greatly enlarged manner and illustrated in a lateral sectional view. Using the blade 304 of the blade unit 300, ultrathin sections are produced in each cycle illustrated by arrows 10a to 10d. As explained in further detail with reference to the following figures, sections produced accordingly adhere to each other, forming a section ribbon, which is made to float on a liquid surface 306 formed in a liquid trough 302 which also holds the blade 304. A transfer element 400 is submerged in the liquid and may be lifted to "fish" the section ribbons from the liquid trough 302 and transfer them to an electron microscope.

The ultramicrotome 100 can comprise a cooling chamber illustrated with a dotted line in Figure 1 and any other devices, for example lighting devices, temperature control devices and the like, as generally known from the prior art.

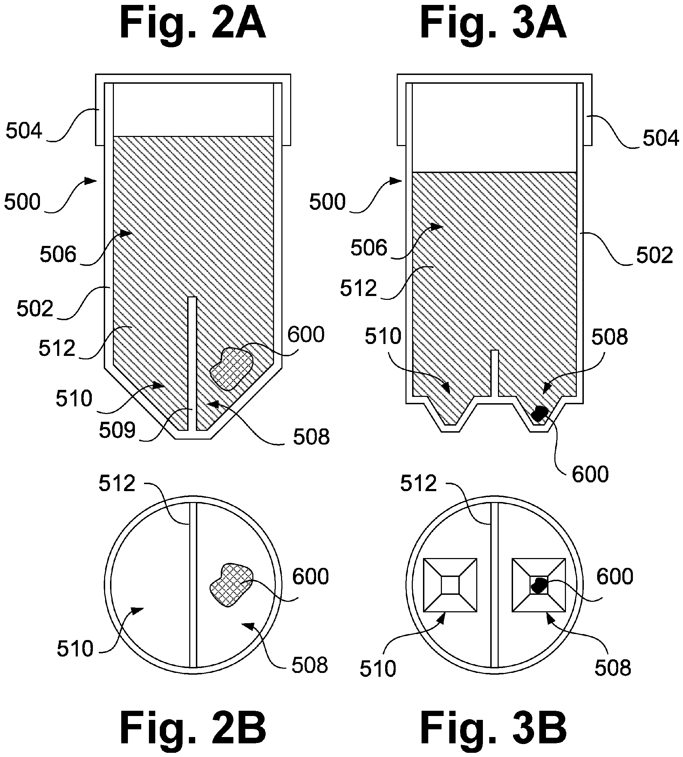

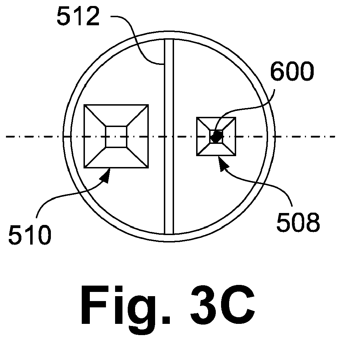

In Figures 2A and 2B, as well as in Figures 3A to 3C, embedding moulds 500 according to specific embodiments of the present invention are shown in a longitudinal (Figures 2A, 3A) and a cross sections (Figures 2B, 3B, 3C). In both cases, the embedding moulds 500 comprise an essentially cylindrical common inner space 506 surrounded by a wall 502 and covered by a lid 504. From the inner space 506, compartments 508 and 510 extend, which are contiguous with the inner space 506. The inner space 506 and the compartments 508, 510 may be filled with an embedding medium 512 which maybe made to cure in the embedding moulds 500. The compartments 508, 510 may be further divided with a dividing element 509.

As shown in Figures 2A and 2B, the compartments 508, 510 may be formed as two halves of a divided tip of the embedding mould 500 while, as shown in Figure 3B, they also may be formed as pyramidal frustra extending from a bottom of the embedding mould 500. A sample 600 is placed in a first compartment 508 of the compartments 508, 510 while a second compartment 510 of the compartments 508, 510 is left empty, i.e. is only filled with embedding medium 512.

As shown in Figure 3C, the compartments 508, 510 may be provided in different sizes or comprising different cross sections in a common plane corresponding to the paper plane. A line in said a common plane or parallel to the paper plane, which is illustrated as a dash-dotted line here, transects the first and the second compartment 508, 510 such that a length of said transects in the first compartment 508 is shorter than a length of said transects in the second compartment 510. When, as shown hereinbelow, a sample block formed in the embedding mould 500 is sectioned in a direction corresponding to said line, larger sections without parts of the sample 600 and smaller sections including parts of the sample 600 maybe formed.

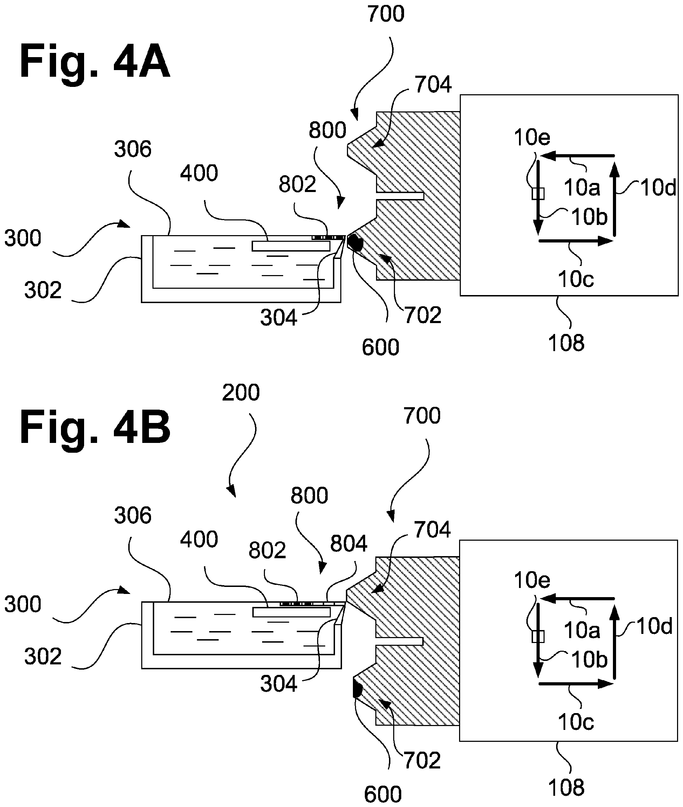

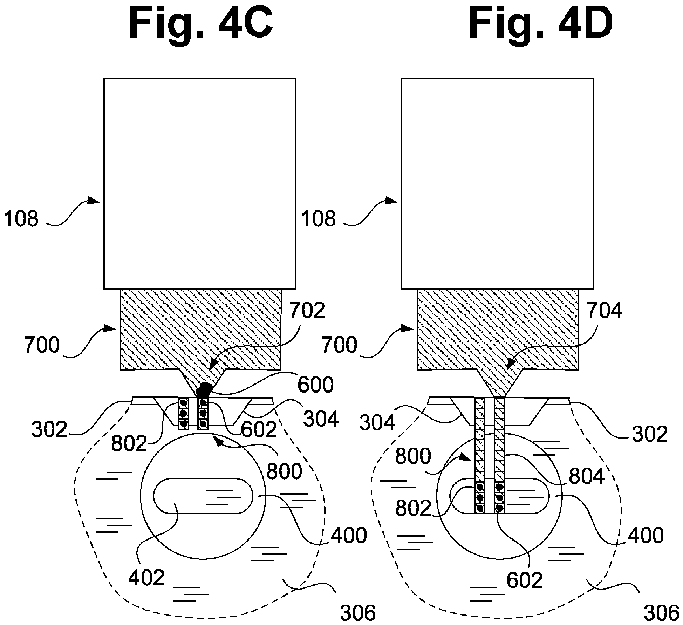

By curing (hardening) the embedding medium 512 in the embedding mould 500, a sample block is formed, as shown in Figures 4A to 4D. Figures 4A to 4D illustrate method steps of a method according to the present invention, wherein Figures 4A and 4B show side views corresponding to that of Figure 1 and Figures 4C and 4D show bird's-eye views from a position above the ultramicrotome 100 shown in Figure 1 along a longitudinal direction of the ultramicrotome 100 and rotated by 90°. Neither of the views and the elements shown therein is drawn to scale. This particularly relates to the sections whose thickness is greatly exaggerated for reasons of clarity. The movements already shown and discussed in connection with Figure 1 are again shown here and illustrated with arrows 10a to 10d and the cutting window 10e in Figures 4A and 4B (omitted in Figures 4C and 4D).

As shown in Figure 4A, by moving the sample holder 108 as discussed and as illustrated with the arrows 10a to 10d, sections 802 may be formed from a part 702 of the sample block 700 corresponding to the first compartment 508 containing the sample 600. Therefore, each of these sections 802, which were referred to as "first" sections before, contains a part of the sample 600. A section ribbon formed accordingly, which initially only comprises "first" sections 802 according to Figure 4A, i.e. sections 802 comprising parts of the sample 600, is indicated 800. By a relative lateral movement between the sample block 700 and the blade 700 between sectioning (i.e. vertically to the paper plane in Figures 4A and 4B and in the paper plane in Figures 4C and 4D), several section ribbons 800 may be formed which parallelly adhere to the blade 304 and are each formed as discussed.

After forming a plurality of first sections, the part 702 of the sample block 700 corresponding to the first compartment 508 containing the sample 600 is substantially shortened, as illustrated in Figure 4B in an exaggerated manner. In consequence, the part 704 of the sample corresponding to the second compartment 510 in which no sample is present, is accessible to the blade. That is, the parts 702 and 704 are, in this example, initially of the same size and the part 702 is shortened by producing sections. However, this embodiment may also be used in connection with sample block parts of different sizes, such as shown in Figure 3C. As shown in Figure 4B, by moving the sample holder 108 as discussed and as illustrated with the arrows 10a to 10d, sections 804 may therefore now be formed from a part 704 of the sample block 700 corresponding to the second compartment 510 not containing the sample 600. Therefore, each of these sections 804, which were referred to as "second" sections before, may be used to position sections 802 containing parts of the sample. The section ribbon 800 is thus elongated from the side of the blade 304 by second sections 804 and thus the sections 802 maybe positioned on a transfer element 400. Again, by a relative lateral movement between the sample block 700 and the blade 700 between sectioning, several section ribbons 800 may be elongated accordingly which parallelly adhere to the blade 304.

Forming two section ribbons 800 containing first and second sections 802, 804, the former containing parts 602 of the sample 600, is again shown in Figures 4C and 4D in a bird's-eye view, where the parts 702 and 704 of the sample block are shown as if the respective other part 704, 702 was not present for reasons of simplification. Not all identical elements are indicated with reference numerals. As shown, by elongating section ribbons 800 with second sections 804, the first sections 802 maybe positioned to correspond to a window 402 of the transfer element 400.

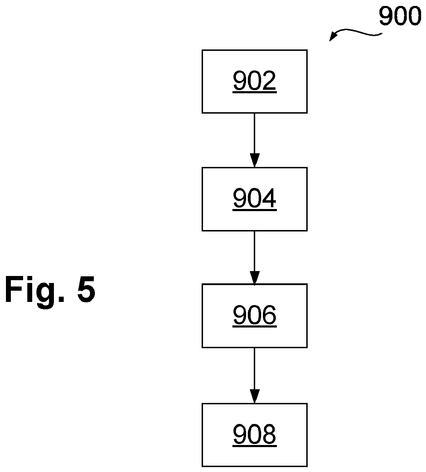

Figure 5 schematically illustrates a method 900 according to an embodiment of the present invention in a procedural plan.

As repeatedly discussed before, the method 900, which is provided for preparing a microscopic sample 600 for examination in an electron microscope, comprises embedding 902 said sample 600 in an embedding medium 512 producing a sample block 700 and serially sectioning 906 said sample block 700 using a microtome 100 producing a section ribbon 800 as explained. In the method 900, said embedding 902 is performed using an embedding mould 500 as also explained. The method comprises, as commonly indicated with a step 904, placing said sample 600 into a first compartment 508 but not a second compartment 510 of the mould 500, filling said first compartment 508, said second compartment 510 and an undivided inner space 506 of the mould 500 at least partially with an embedding medium 512 and curing said embedding medium 512. Said serial sectioning 906 includes forming said first sections 802 from a part 702 of the sample block 700 cured in said first compartment 508 and forming said one or more second sections 804 from a part 704 of the sample block 700 cured in said second compartment 510. In a step 908, sections ribbons 800 formed accordingly may be fished from the liquid surface 306.

### Reference numerals

- 10a-10d: Microtome movements
- 10e: Cutting window

- 100: Ultramicrotome
- 102: Housing
- 104: Sample arm
- 106: Observation microscope
- 108: Sample holder
- 110: Handle
- 150: Control unit

- 300: Blade unit
- 302: Liquid trough
- 304: Blade
- 306: Liquid surface

- 400: Transfer element

- 500: Embedding mould
- 502: Wall
- 504: Lid
- 506: Common inner space
- 508: First compartment
- 510: Second compartment
- 509: Dividing element

- 600: Sample
- 602: Sample part

- 700: Sample block
- 702: First part of sample block
- 704: Second part of sample block
- 800: Section ribbon
- 802: First section
- 802: Second section

- 900: Method
- 902: Embedding
- 904: Sample placement, curing
- 906: Serial Sectioning
- 908: Fishing

## Claims

1. A method (900) for preparing a microscopic sample (600) for examination in an electron microscope, said method (900) comprising embedding (902) said sample (600) in an embedding medium (512) producing a sample block (700) and serially sectioning (906) said sample block (700) using a microtome (100) producing a section ribbon (800), wherein said section ribbon (800) is produced to comprise one or more first sections (802) of the sample block (700) including a part (602) of the sample (600) and one or more second sections (804) of the sample block (700) not including a part (602) of the sample (600), wherein said embedding (902) is performed using an embedding mould (500) comprising an undivided inner space (506), a first compartment (508) and a second compartment (510), said first compartment (508) and said second compartment (510) extending from and being contiguous with said undivided inner space (506), wherein said embedding (902) comprises placing said sample (600) into said first compartment (508) but not in said second compartment (510), filling said first compartment (508), said second compartment (510) and said undivided inner space (506) at least partially with said embedding medium (512) and curing said embedding medium (512), and wherein said serial sectioning (906) includes forming said one or more first sections (802) from a part (702) of the sample block (700) cured in said first compartment (508) and forming said one or more second sections (804) from a part (704) of the sample block (700) cured in said second compartment (510).

2. The method (900) according to claim 1, wherein said section ribbon is made to float on a liquid surface (306) while being formed by said serial sectioning, said one or more first sections (802) being pushed forward on the liquid surface (306) to a target position on the liquid surface (306) by a transfer distance, said pushing forward comprising forming a plurality of said second sections (804) in said section ribbon (800) in a cumulative length corresponding to said transfer distance after forming said one or more first sections (802).

3. The method (900) according to claim 2, wherein said one or more first sections (802) are fished from the liquid surface (306) using a sample carrier (400) at the target position.

4. The method (900) according to any one of the preceding claims, wherein said forming the one or more first sections (802) is preceded by positioning said part (702) of the sample block (700) formed in said first compartment (508) to be cuttable by a blade (304) of said microtome (100) and wherein said forming the one or more second sections (804) is preceded by positioning said part (704) of the sample block (700) formed in said second compartment (510) to be cuttable by the blade (304) of said microtome (100).

5. The method (900) according to any one of the preceding claims, wherein said sample block is mounted in said microtome (100) such that said part (702) of the sample block (700) formed in said first compartment (508) is arranged vertically below and in a common vertical plane with said part (704) of the sample block (700) formed in said second compartment (510).

6. The method (900) according to any one of the preceding claims, wherein, by cutting said part (704) of the sample block (700) formed in said second compartment (510), sections comprising a different, preferably a larger dimension at least in a cutting direction are formed than by cutting said part (702) of the sample block (700) formed in said first compartment (508).

7. An embedding mould (500) adapted to be used in a method (900) for preparing a microscopic sample (600) for examination in an electron microscope, comprising an undivided inner space (506), a first compartment (508) and a second compartment (510), said first compartment (508) and said second compartment (510) extending from and being contiguous with said undivided inner space (506).

8. The embedding mould (500) according to claim 7, wherein at least a part of said undivided inner space (506) is cylindrical and has an inner diameter of 2 to 15 mm.

9. The embedding mould (500) according to claim 7 or 8, wherein at least the inner space (506) is surrounded by a wall (502) made of a plastic material, the wall (502) having a thickness of 0.1 to 0.5 mm.

10. The embedding mould (500) according to any one of claims 7 to 9 comprising a tear tab and a tear track to liberate a sample block (700) formed in the embedding mould (500).

11. The embedding mould (500) according to any one of claims 7 to 10 comprising a flat bottom, wherein said first compartment (508) and said second compartment (510) are at least in part formed in the form of indentations in said flat bottom.

12. The embedding mould (500) according to claim 11, wherein said indentations are provided as conical or pyramidal frustra.

13. The embedding mould (500) according to any one of claims 7 to 12, wherein said first compartment (508) and said second compartment (510) comprise portions divided by a dividing structure (509) formed in said embedding mould (500).

14. The embedding mould (500) according to any one of claims 7 to 13, wherein said first and second compartments (508, 510) are provided in different sizes or comprising different cross sections in a common plane.

15. The embedding mould (500) according to claim 14 wherein said common plane is perpendicular to a longitudinal axis of the inner space (506), wherein a line in said common plane transects the first and the second compartment (508, 510), and wherein a length of said transection with the first compartment (508) is shorter than a length of said transection with the second compartment (510).
